(19) Europäisches Patentamt
European Patent Office
Office européen des brevets

(11) EP 2 071 072 B1

(12) **EUROPEAN PATENT SPECIFICATION**

(45) Date of publication and mention of the grant of the patent:
**31.12.2014 Bulletin 2015/01**

(21) Application number: **07829374.3**

(22) Date of filing: **02.10.2007**

(51) Int Cl.:
***D06M 15/267*** (2006.01) ***C08L 33/00*** (2006.01)
***D06M 15/285*** (2006.01) ***D06M 15/647*** (2006.01)
***D06M 15/70*** (2006.01) ***C08L 39/02*** (2006.01)
***C08L 33/14*** (2006.01) ***D06M 15/643*** (2006.01)
***C09D 133/26*** (2006.01) ***C08L 33/26*** (2006.01)

(86) International application number:
**PCT/JP2007/069636**

(87) International publication number:
**WO 2008/041775 (10.04.2008 Gazette 2008/15)**

(54) **TREATMENT COMPOSITION FOR TEXTILE PRODUCTS**

BEARBEITUNGSZUSAMMENSETZUNG FÜR TEXTILPRODUKTE

COMPOSITION DE TRAITEMENT POUR PRODUITS TEXTILES

(84) Designated Contracting States:
**DE FR GB**

(30) Priority: **02.10.2006 JP 2006270862**
**24.05.2007 JP 2007137641**

(43) Date of publication of application:
**17.06.2009 Bulletin 2009/25**

(73) Proprietor: **Kao Corporation**
**Chuo-ku**
**Tokyo 103-8210 (JP)**

(72) Inventors:
- **IGARASHI, Takako**
  **Wakayama-shi**
  **Wakayama 640-8580 (JP)**
- **OGURA, Nobuyuki**
  **Wakayama-shi**
  **Wakayama 640-8580 (JP)**
- **YOSHIMURA, Tadanori**
  **Wakayama-shi**
  **Wakayama 640-8580 (JP)**
- **SUZUKI, Keigo**
  **Wakayama-shi**
  **Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**JP-A- 10 183 472** **JP-A- 2000 080 564**
**JP-A- 2000 129 577** **JP-A- 2003 525 357**
**JP-A- 2005 082 924** **JP-A- 2005 187 987**
**JP-A- 2006 274 499** **US-A1- 2004 107 506**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 071 072 B1

## Description

### Field of the Invention

The present invention relates to a treatment composition for textile products.

### Background of the Invention

In recent years, a drum-type washing and drying machine that is a washing machine endowed with a drying function is rapidly becoming popular. However, when a heating drying machine (hereinafter, sometimes referred to simply as drying machine) loaded in this washing and drying machine is used in drying, clothes are wrinkled and shrunk and towels are rugged, and thus a fabric finisher capable of solving this problem is required.

Wrinkles remaining on clothes after washing give uncomfortable feeling upon wearing, while wrinkles generated when a drying machine is used are bent wrinkles formed deeply in clothes and seem significantly ugly. The wrinkles generated when a drying machine is used are unique ones not observed in clothes dried in a hanging condition after usual washing. To circumvent the problem of the wrinkles when a washing and drying machine is used, the user of a washing and drying machine contrives, for example, methods in which (1) a lot of clothes are not packed and (2) clothes while in a state containing water during drying are removed from a tank and dried in a hanging condition.

Meanwhile, recent new washing and drying machines are getting bigger each year so that a lot of clothes can be washed and dried at one time. However, a lot of clothes are dried while in a tank, there arises the problem of wrinkles as described above. Accordingly, it is impossible at present to take advantage of the convenience advocated by washing and drying machine manufacturers, that is, "the operation of from washing to drying can be performed once the button is pressed", and the merit of the washing and drying machine getting bigger, that is, "a lot of clothes can be washed and dried at one time". Accordingly, there is demand for a fabric finisher capable of not only giving flexibility but also reliably reducing wrinkles under any service conditions of the washing and drying machine.

Some treatment agents for textile products and treatment methods developed for use in washing and drying machines have already been known. JP-A 7-18578 discloses a softening agent for a drying machine, wherein a specific base material such as a nonwoven fabric impregnated with a softening agent is used. JP-A 6-17376 discloses a sheet for a drying machine, wherein a flexible base material is impregnated with a composition containing a specific silicone compound. JP-A 2005-187987 discloses a wrinkle-preventing finisher for a composition using 1% or more water-soluble polymer in combination with an ester group-containing cation activator and a silicone compound. Further, JP-A 2004-512431 and JP-A 2004-515660 disclose a method of using water-insoluble polymer nanoparticles. With respect to use of polymer nanoparticles, techniques applied to finishing use are recently disclosed in WO-A 2005/103215 and US-A 2004/0116321.

WO-A 2004/25017 discloses a liquid softening agent for textile products, which uses a combination of a cationic water-soluble polymer and a silicone compound to improve flexibility. JP-B 2005-528538 discloses an aqueous polymer preparation containing a cationic polymer.

As a technique of removing wrinkles of clothes when subjected to other methods than with a drying machine, there is a method of treatment by spraying with an aqueous medium composition containing an effective amount of silicone and a film-forming polymer, as shown in JP-B 10-508912.

JP 2005-082924 A relates to a softener composition comprising a cationic group-containing monomer unit and a hydrophilic nonionic group-containing monomer unit and containing a partially crosslinked polymer. This composition is used as a softener.

### Summary of the Invention

The present invention relates to a treatment composition for textile products for use in a drying machine, which contains a water-soluble cationic polymer having a weight-average molecular weight of 500,000 to 10,000,000 (hereinafter referred to as component (A)), a water-insoluble cationic polymer (hereinafter referred to as component (B)) and a silicone compound (hereinafter referred to as component (C)), wherein the ratio of component (A) to the total mass of the components (A) and (B) is 3 to 100% by mass and the ratio of the total mass of the components (A) and (B) to the total mass of the components (A), (B) and (C) is 5 to 85% by mass, wherein (A) and (B) are as defined below.

The present invention provides textile products treated with the treatment composition for textile products and a method of treating textile products by heat treatment in a heating drying machine. Further, the present invention provides use of the composition in a textile agent for treating textile products in a drying machine.

Detailed Description of the Invention

The methods disclosed in JP-A 7-18578, JP-A 6-17376, JP-A 2005-187987, JP-A 2004-512431 and JP-A 2004-515660 are poor in an effect of eliminating or reducing wrinkles unique to a drying machine and cannot attain finish of clothes which are free of wrinkles as desired by the user of a washing and drying machine and are excellent in texture (softness).
WO-A 2005/103215 and US-A 2004/0116321 are suited for applications such as sustained release of perfumes, conferment of softness, etc. and are not related to measures of solving the problem of wrinkles unique to a drying machine.
JP-B 10-508912 does not describe application to a washing and drying machine, and its effect of removing wrinkles in this application is unclear.
The present invention provides a treatment composition for textile products, which gives comfortable texture (softness) to clothes in washing with a heating drying machine, reduces wrinkles unique to a drying machine, and is excellent in an effect of shape retention and in an effect of preventing shrinkage.
According to the present invention, there can be provided a treatment composition for textile products, which gives comfortable texture (softness) to clothes in washing with a heating drying machine, reduces wrinkles unique to a drying machine, and is excellent in an effect of shape retention and in an effect of preventing shrinkage, as well as a method of treating textile products.

Component (A)

Component (A) in the present invention is a water-soluble cationic polymer having a weight-average molecular weight of 500,000 to 10,000,000. The term "water-soluble" refers to a component dissolved in an amount of 0.05 g in 100 g water at 20°C, preferably in an amount of 1.0 g in 100 g water at 20°C.
From the viewpoint of controlling fiber physical properties of textile products to sufficiently exhibit a wrinkle preventing effect, the weight-average molecular weight of component (A) is 500,000 to 10,000,000, preferably 800,000 to 10, 000, 000, more preferably 500,000 to 7,000,000, even more preferably 800,000 to 6,000,000. The weight-average molecular weight of component (A) is a value determined by a method described later in the Examples. The upper limit of the molecular weight measured in this method corresponds to a threshold limit value in this measurement method.
Component (A) in the present invention can give a thickening effect to give fiber physical properties effective in reduction of wrinkles to textile products in an aqueous medium, a hydrophilic medium such as a lower alcohol having 1 to 3 carbon atoms (ethanol, isopropyl alcohol or the like) or a mixed medium thereof.
Component (A) in the present invention contains a cationic group-containing vinyl monomer as an essential constituent monomer, and is for example a copolymer containing the cationic group-containing vinyl monomer and a nonionic group-containing vinyl monomer copolymerizable therewith.
Specific examples of the cationic group-containing vinyl monomer include acid-neutralized products or quaternary ammonium salts of (meth)acrylates or (meth)acrylamides having a dialkylamino group, such as dimethylaminoethyl (meth)acrylate, diethylaminoethyl (meth)acrylate, dipropylaminoethyl (meth)acrylate, diisopropylaminoethyl (meth)acrylate, dibutylaminoethyl (meth)acrylate, diisobutylaminoethyl (meth)acrylate, di-tert-butylaminoethyl (meth)acrylate, dimethylaminopropyl (meth)acrylamide, diethylaminopropyl (meth)acrylamide, dipropylaminopropyl (meth)acrylamide, diisopropylaminopropyl (meth)acrylamide, dibutylaminopropyl (meth)acrylamide, diisobutylaminopropyl (meth)acrylamide, and di-tert-butylaminopropyl (meth)acrylamide, styrenes having a dialkylamino group, such as dimethylaminostyrene and dimethylaminomethylstyrene, and monomers having an amino group, for example, vinylpyridines such as 4-vinylpyridine and 2-vinylpyridine, N-vinyl heterocyclic compounds such as N-vinylimidazole, and vinyl ethers such as aminoethyl vinyl ether and dimethyl aminoethyl vinyl ether, as well as diallyl quaternary ammonium salts such as dimethyldiallyl ammonium chloride and diethyldiallyl ammonium chloride.
In this specification, (meth)acrylate refers to an acrylate or a methacrylate, (meth)acrylamide refers to an acrylamide or a methacrylamide, and (meth) acrylic acid refers to acrylic acid or methacrylic acid.
An acid preferable for obtaining the acid-neutralized products includes hydrochloric acid, sulfuric acid, nitric acid, acetic acid, formic acid, maleic acid, fumaric acid, citric acid, tartaric acid, adipic acid, sulfamic acid, toluenesulfonic acid, lactic acid, pyrrolidone-2-carboxylic acid and succinic acid. A quaternarizing agent preferable for obtaining the quaternary ammonium salts includes alkyl halides such as methyl chloride, ethyl chloride, methyl bromide and methyl iodide, and general alkylating agents such as dimethyl sulfate, diethyl sulfate and di-n-propyl sulfate.
These cationic group-containing vinyl monomers are at least one of cationic group-containing vinyl monomers represented by formula (I) or (II) (hereinafter referred to as component (a1)):

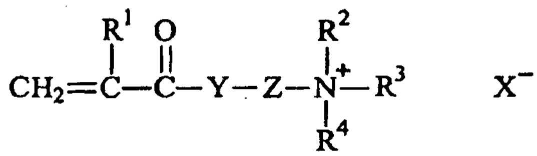

(I)

wherein $R^1$ represents a hydrogen atom or a methyl group, $R^2$ and $R^3$ are the same or different and each represent an alkyl or alkenyl group having 1 to 4 carbon atoms, $R^4$ represents a hydrogen atom or an alkyl group having 1 to 4 carbon atoms, Y represents -O-, -NH- or $-O-CH_2CH(OH)-$ group, Z represents a linear or branched alkylene group having 1 to 4 carbon atoms, and X represents a conjugate base for acid, a halogen atom or an alkylsulfate group having 1 to 4 carbon atoms; and

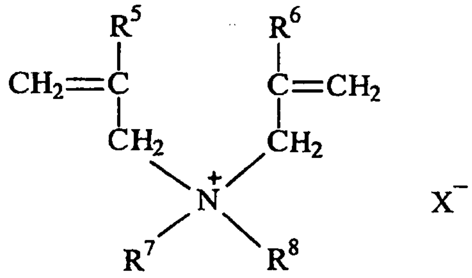

(II)

wherein $R^5$ and $R^6$ are the same or different and each represent a hydrogen atom or a methyl group, $R^7$ and $R^8$ are the same or different and each represent a hydrogen atom or an alkyl group having 1 to 4 carbon atoms, and X has the same meaning as defined above.

More preferable examples of the cationic group-containing vinyl monomer represented by formula (I) or (II) include quaternary ammonium salts obtained by quaternarizing, with the quaternarizing agent, dimethylaminoethyl (meth)acrylate, diethylaminoethyl (meth)acrylate, dimethylaminopropyl (meth)acrylamide and diethylaminopropyl (meth) acrylamide, as well as dimethyldiallyl ammonium chloride. The acid-neutralized monomer undergoes dissociation of its neutralizing acid depending on e.g. the pH of the system to change a polymer structure, and thus has a disadvantage of poor viscosity stability. For this reason too, the quaternary ammonium salt monomer is more preferable.

The nonionic group-containing vinyl monomer copolymerizable with the cationic group-containing vinyl monomer is at least one of nonionic group-containing hydrophilic vinyl monomer having a solubility of not lower than 1 g/100 g in water (20°C), represented by formula (III) or (IV) (referred to hereinafter as component (a2)):

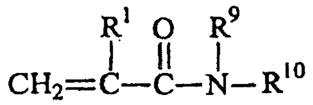

(III)

wherein $R^1$ has the same meaning as defined above, $R^9$ and $R^{10}$ are the same or different and each represent a hydrogen atom or a linear or branched alkyl or alkenyl group which has 1 to 8 carbon atoms and may have a hydroxyl group.

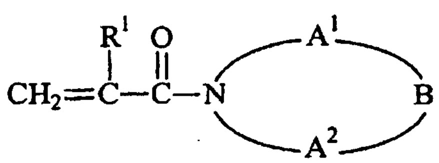

(IV)

wherein $R^1$ has the same meaning as defined above, $A^1$ and $A^2$ are the same or different and each represent a group represented by formula $-(CH_2)_n-$ wherein n is an integer of 2 to 6, and B represents -O- or $-CH_2-$ group. Specific examples of the nonionic group-containing hydrophilic vinyl monomer represented by formula (III) include (meth)acrylamide, N-methyl(meth)acrylamide, N,N-dimethyl(meth)acrylamide, N,N-diethyl(meth)acrylamide, N-n-propyl(meth)acrylamide, N-isopropyl(meth)acrylamide, N-tert-butyl(meth)acrylamide, and N-isobutyl(meth)acrylamide. Specific examples of the nonionic group-containing hydrophilic vinyl monomer represented by formula (IV) include N-(meth)acryloylmorpholine. However, the present invention is not limited to such exemplary monomers, and these nonionic group-containing vinyl monomers may be used alone or as a mixture of two or more thereof.

Among these nonionic group-containing hydrophilic vinyl monomers, acrylamide or N,N-di-substituted

(meth)acrylamide is preferably used to achieve high wrinkle prevention performance, and acrylamide, N,N-dimethyl(meth)acrylamide, and N,N-diethyl(meth)acrylamide are even more preferable.

The hydrophilicity necessary as a property of the nonionic group-containing hydrophilic vinyl monomer is hydrophilicity in terms of a solubility of not less than 1.0 g per 100.0 g, preferably not less than 3.0 g, per 100.0 g water at 20°C in the range of pH 3 to 12.

From the viewpoint of attaining sufficient persistence by adsorption onto fibers, regulating fiber physical properties sufficiently, and exhibiting an effective wrinkle reducing effect, the ratio of the components (a1) and (a2) constituting component (A) in the present invention is established such that (a1)/[(a1) + (a2)]×100 (%) is preferably 1 to 100% by mass, more preferably 3 to 100% by mass. The mole ratios of the components (a1) and (a2) are established such that (a1)/(a2) is 1/99 to 80/20, preferably 3/97 to 70/30.

As the monomers constituting component (A) in the present invention, not only the components (a1) and (a2) but other vinyl monomers copolymerizable therewith can also be used.

The other vinyl monomers include, for example, (meth) acrylic acid derivatives such as methyl (meth) acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, neopentyl (meth)acrylate, cyclopentyl (meth)acrylate, n-hexyl (meth)acrylate, cyclohexyl (meth)acrylate, n-octyl (meth)acrylate, isooctyl (meth)acrylate, 2-ethylhexyl (meth)acrylate, n-decyl (meth)acrylate, isodecyl (meth)acrylate, lauryl (meth)acrylate, tridecyl (meth)acrylate, stearyl (meth)acrylate, isostearyl (meth)acrylate, behenyl (meth) acrylate, phenyl (meth) acrylate, toluyl (meth) acrylate, xylyl (meth)acrylate, benzyl (meth)acrylate, 2-ethoxyethyl (meth)acrylate, 2-butoxyethyl (meth)acrylate, 2-phenoxy (meth)acrylate, 2-methoxypropyl (meth)acrylate, 3-methoxypropyl (meth)acrylate, 2-ethoxypropyl (meth)acrylate and 3-ethoxypropyl (meth)acrylate; anionic group-containing monomers such as 2-acrylamide-2-methylpropanesulfonic acid, sodium styrenesulfate, acrylic acid, methacrylic acid and 2-sulfoethyl methacrylate; and betaines such as N-(3-sulfopropyl)-N-acryloyloxyethyl-N,N-dimethyl ammonium betaine, N-(3-sulfopropyl)-N-methacryloylamidopropyl-N,N-dimethyl ammonium betaine, N-(3-carboxymethyl)-N-methacryloylamidopropyl-N,N-dimethyl ammonium betaine, N-(3-sulfopropyl)-N-methacryloyloxyethyl-N,N-dimethyl ammonium betaine, and N-carboxymethyl-N-- methacryloyloxyethyl-N,N-dimethyl ammonium betaine.

Component (B)

Component (B) in the present invention is a water-insoluble cationic polymer. This water-insoluble cationic polymer may be chemically crosslinked. Component (B) may be a dry powder or a water dispersion. Component (B) may include for example in the form of a crosslinked polymer, a crosslinked product or a gel.

The water-insoluble cationic polymer refers to a cationic polymer which when formed into a water dispersion of the cationic polymer at a concentration of 0.05% by mass, then dissolved and dispersed at 40°C for 5 to 6 hours under stirring, and filtered with a membrane filter (made of acetate cellulose, 0.45 μm), does not pass through the membrane filter.

Component (B) can be dissolved or dispersed in an aqueous medium, a hydrophilic medium such as a lower alcohol having 1 to 3 carbon atoms (ethanol, isopropyl alcohol or the like) or a mixed medium thereof, thereby giving a thickening effect at a level different from component (A) and exhibiting rheologic properties effective in reduction of wrinkles. That is, component (B) performs rheology control just before drying.

Component (B) in the present invention is for example a copolymer containing a cationic group-containing vinyl monomer, a nonionic group-containing vinyl monomer copolymerizable therewith, and a crosslinkable vinyl monomer having two or more vinyl groups in the molecule.

The cationic group-containing vinyl monomer is exemplified by the same cationic group-containing vinyl monomer as constituting component (A), and is at least one of cationic group-containing vinyl monomer represented by formula (I) or (II) (referred to hereinafter as component (b1)), more preferably a quaternary ammonium salt obtained by quaternarizing, with the quaternarizing agent, dimethylaminoethyl (meth)acrylate, diethylaminoethyl (meth)acrylate, dimethylaminopropyl (meth)acrylamide or diethylaminopropyl (meth)acrylamide, or dimethyldiallyl ammonium chloride.

The nonionic group-containing vinyl monomer is exemplified by the same nonionic group-containing vinyl monomer as constituting component (A), and is at least one of nonionic group-containing hydrophilic vinyl monomer having a solubility of not lower than 1.0 g/100.0 g in water (20°C), represented by formula (III) or (IV) (referred to hereinafter as component (b2)), more preferably acrylamide or N,N-disubstituted (meth)acrylamide, even more preferably acrylamide, N,N-dimethyl(meth)acrylamide or N,N-diethyl(meth)acrylamide from the viewpoint of attaining high wrinkle prevention performance.

The crosslinkable vinyl monomer having two or more vinyl groups in the molecule (referred to hereinafter as component (b3)) includes polyhydric-alcohol (meth)acrylates such as ethylene glycol di(meth)acrylate, diethylene glycol di(meth)acrylate, polyethylene glycol di(meth)acrylate, propylene glycol di(meth)acrylate, dipropylene glycol di(meth)acrylate, polypropylene glycol di(meth)acrylate, 1,2-butylene glycol di(meth)acrylate, 1,3-butylene glycol di (meth) acrylate, neopentyl glycol di (meth) acrylate, glycerin di(meth)acrylate, glycerin tri(meth)acrylate, trimethylol propane tri(meth)acrylate, and pentaerythritol tetra(meth)acrylate; acrylamides such as N-methylallylacrylamide, N-vinylacrylamide, N,N'-methylenebis(meth)acrylamide, and bisacrylamidoacetic acid; divinyl compounds such as divinyl benzene, divinyl ether,

and divinyl ethylene urea; polyallyl compounds such as diallyl phthalate, diallyl malate, diallylamine, triallylamine, a triallyl ammonium salt, an allyl ether of pentaerythritol, and an allyl ether of sucrose having at least two allyl ether units in the molecule; and unsaturated-alcohol (meth) acrylates such as vinyl (meth)acrylate, allyl (meth)acrylate, and 2-hydroxy-3-acryloyloxypropyl (meth)acrylate.

Preferable among these crosslinkable vinyl monomers are ethylene glycol di(meth)acrylate, polyethylene glycol di(meth)acrylate, divinylbenzene, pentaerythritol triallyl ether, and pentaerythritol tetraallyl ether.

In order to attain sufficient persistence by absorption onto fibers to achieve fiber physical properties effective in conferring a wrinkle preventing effect, the ratio of the components (b1) and (b2) constituting component (B) in the present invention is established such that component (b1)/component (b2) (mole ratio) is 1/99 to 80/20, preferably 3/97 to 70/30.

From the viewpoint of wrinkle prevention performance, the ratio of component (b3) is preferably 0.001 to 5.0 mol%, even more preferably 0.002 to 3.0 mol%, based on the total amount of the monomers.

Component (B) in the present invention can have a crosslinked structure introduced into its structure by other methods without using the crosslinkable vinyl monomer. The other methods include a method of giving branches to a molecular structure of a polymer by using a polymerization initiator such as a peroxide initiator or redox initiator, a method of copolymerizing vinyl monomers having a reactive group such as an alkoxy group, and a method of crosslinking only the surface-layer portion of a resin obtained by polymerization as shown in JP-B 60-18690 and JP-B 61-48521. Alternatively, a method shown in "Gel Soft Material No Kiso To Ohyo" (Fundamentals and Applications of Gel Soft Material), 4th edition, p. 45, published by Sangyo Tosho may also be used.

As the monomers constituting component (B) in the present invention, not only the components (b1), (b2) and (b3) but also other vinyl monomers copolymerizable therewith can be used. The other vinyl monomers copolymerizable therewith include, for example, the (meth)acrylic acid derivatives, anionic group-containing monomers and betaines other than the components (a1) and (a2) constituting component (A).

Process for Producing the Components (A) and (B)

The process for producing the components (A) and (B) in the present invention is not necessarily limited, but is usually preferably a method such as solution polymerization, inversed phase suspension polymerization, or precipitation polymerization. For example, the solution polymerization method includes a method wherein a monomer component and if necessary a crosslinking agent, a chain transfer agent etc. are uniformly dissolved in a solvent such as water or a hydrophilic organic solvent uniformly mixable with water, or a mixed solvent thereof, then dissolved oxygen in the system is removed by replacement by an inert gas such as nitrogen or carbon dioxide, and a polymerization initiator is added to initiate the reaction. The polymerization initiation temperature is usually about 20 to 90°C, and the reaction time is about 1 to 10 hours. When a water-sparingly-soluble component is used as the monomer, combined use of a hydrophilic organic solvent is desirable.

Typical examples of the hydrophilic organic solvent include lower alcohols such as methyl alcohol, ethyl alcohol and propyl alcohol, cyclic ethers such as tetrahydrofuran and dioxane, acetone, acetonitrile, dimethylformamide, dimethylacetamide, and dimethylsulfoxide. Particularly preferable among these solvents are tetrahydrofuran, acetonitrile, dimethylformamide, dimethylacetamide, and dimethylsulfoxide.

The polymerization initiator used herein includes a peroxide dissolved uniformly in solvent, an organic or inorganic peroxide or salts thereof, and an azobis compound or its redox initiator used in combination with a reducing agent. Typical examples include, for example, tert-butylperoxide, t-amyl peroxide, cumyl peroxide, acetyl peroxide, propionyl peroxide, benzoyl peroxide, benzoyl isobutyryl peroxide, lauroyl peroxide, tert-butylhydroperoxide, cyclohexyl hydroperoxide, tetralin hydroperoxide, tert-butylperacetate, tert-butylperbenzoate, bis(2-ethylhexyl peroxydicarbonate), 2,2'-azobisisobutyronitrile, phenyl azotriphenyl methane, 2,2'-azobis(2-amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, sodium persulfate, potassium persulfate, ammonium persulfate, hydrogen peroxide, and a combination of a persulfate and a tertiary amine such as triethylamine, triethanolamine or dimethyl aniline.

Particularly preferable among those described above are tert-butylperoxide, benzoyl peroxide, 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2'-azobis[2-(2-imidazolin-2-yl)propane] dihydrochloride, sodium persulfate, potassium persulfate, ammonium persulfate, and a combination of the persulfate and a tertiary amine such as triethylamine, triethanolamine or dimethyl aniline.

A polymerizer used in production of the components (A) and (B) in the present invention is not particularly limited. In the solution polymerization method, a container having a plurality of rotating stirring arms for example can be mentioned. It is necessary that the container having a plurality of rotating stirring arms be capable of giving shear force, by rotation of the rotating stirring arms, to a water-containing gelled polymer formed with the progress of solution polymerization of a monomer mixture. It is necessary that the number of rotating stirring arms be two or more, and such

containers include devices such as a dual-arm kneader (hereinafter referred to simply as kneader). When the kneader is used, its two rotating stirring arms are used by rotating them at the same speed or different speeds in the opposite direction.

When rotated at the same speed, the two rotating stirring arms are used such that their radiuses of rotation overlap with each other. When rotated at different speeds, the two rotating stirring arms are used such that their radiuses of rotation do not overlap with each other. As the rotating stirring arms, any of sigma-type arms, S-shaped arms, Banbury-type arms and fishtail-shaped arms can be used.

One example of production of the components (A) and (B) in the present invention includes a method wherein 10 to 50% by mass aqueous solution of a monomer mixture is introduced into a kneader equipped with a lid, the atmosphere in the system is replaced if necessary by an inert gas such as nitrogen, a water-soluble radical polymerization initiator is added to initiate polymerization at ordinary temperatures or under heating at 30 to 70°C, and polymerization products formed with the progress of polymerization are finely pulverized by shear force by rotation of blades of the kneader, to complete the polymerization. As a matter of course, the scope of the present invention is not limited to this example. The initial concentration of the aqueous monomer mixture used herein is preferably 10 to 50% by mass.

From the viewpoint of increasing the polymerization degree of a polymer chain of the main chain and of increasing the reaction rate to reduce the amount of residual monomers, the amount of the polymerization initiator used is preferably 0.01 to 5.0 mol%, more preferably 0.01 to 3.0 mol%, even more preferably 0.01 to 1.0 mol%, based on the monomer component.

The reaction product is a gel containing the solvent used in the reaction and is usually pulverized with a rotary cutter or the like, then dried by a method such as heating under reduced pressure to remove the solvent, pulverized and classified to yield powder.

In the inversed phase suspension polymerization method, a monomer component and if necessary a crosslinking agent are dissolved uniformly in water, then suspended or emulsified with a dispersant or the like in an organic solvent not uniformly mixed with water, and subjected to polymerization reaction. The polymerization initiator used is not limited to water-soluble one and may be one soluble in an organic solvent. The organic solvent used herein includes not only the solvents but also hydrocarbon organic solvents such as hexane, cyclohexane, heptane, octane, benzene, toluene, xylene and ethyl benzene, halogenated hydrocarbon organic solvents such as carbon tetrachloride and dicycloethane, and mineral oil such as isobar.

Examples of the dispersant include sorbitan monostearate, sorbitan monopalmitate, polyvinyl alcohol, methylcellulose, ethylcellulose, hydroxymethylcellulose, hydroxyethylcellulose, carboxymethylcellulose, carboxyethylcellulose and sugar ester.

Removal of dissolved oxygen from the system, treatment of the reaction product, etc. are the same as described above. The reaction conditions are not necessarily limited, but are generally as follows: the amount of the solvent used is equal to and up to 20-times, preferably equal to and up to 10-times, the amount of the aqueous monomer solution; the amount of the polymerization initiator used is 0.01 to 5 mol%, preferably 0.01 to 3 mol%, based on the monomer component; the polymerization initiation temperature is about 10 to 90°C; and the polymerization reaction time is about 1 to 10 hours.

Treatment Composition for Textile Products

The treatment composition for textile products of the present invention contains component (A) as an essential component. From the viewpoint of giving excellent wrinkle prevention performance and finish feel, the content of component (A) in the composition of the present invention is
0.01 to 5.0% by mass. From the viewpoint of giving excellent wrinkle prevention performance and finish feel, the content of component (B) in the composition of the present invention is
0.01 to 5.0% by mass.

The ratio of component (A) to the total mass of the components (A) and (B) in the composition of the present invention, which is represented by formula (V) below, is preferably 3 to 100% by mass, more preferably 5 to 100% by mass, even more preferably 10 to 100% by mass.

$$(A)/[(A)+(B)]\times 100\ (\%) \qquad (V)$$

In the present invention, the components (A) and (B) may be simultaneously synthesized by carrying out the reaction once, thereby giving their mixture. That is, a water-soluble cationic polymer component and a water-insoluble cationic polymer component having a gelling ability can be simultaneously formed in the reaction carried out once by appropriately establishing the type and proportion of monomers, the type and amount of a polymerization initiator, the

polymerization temperature, the reaction time, etc. in the process for producing the components (A) and (B). If the water-soluble cationic polymer component formed at this time can satisfy the physical properties of component (A), the water-soluble cationic polymer component can serve as component (A), and the water-insoluble cationic polymer component as component (B). At this time, the ratio of the components (A) and (B), represented by the formula (V), is preferably 3 to 100% by mass, more preferably 5 to 100% by mass, even more preferably 10 to 100% by mass.

From the viewpoint of improving wrinkle prevention performance and the texture of fibers, the treatment composition for textile products of the present invention preferably contains a silicone compound as component (C). The content of component (C) in the composition of the present invention is preferably 0.01 to 20.0% by mass, more preferably 0.01 to 10.0% by mass.

The silicone compound as component (C) used in the present invention includes silicone compounds such as dimethylpolysiloxane, quaternary ammonium-modified dimethylpolysiloxane, amino-modified dimethylpolysiloxane, polyoxyalkylene-modified silicone, aminopolyoxyalkylene-modified silicone, amide-modified dimethylpolysiloxane, ethoxy-modified dimethylpolysiloxane, carboxy-modified dimethylpolysiloxane, polyoxyalkylene-modified dimethylpolysiloxane, and fluorine-modified dimethylpolysiloxane.

In the present invention, dimethylpolysiloxane, amino-modified dimethylpolysiloxane, aminopolyoxyalkylene-modified silicone, amide-modified dimethylpolysiloxane, and polyoxyalkylene (polyoxyethylene and/or polyoxypropylene)-modified dimethylpolysiloxane, each of which has a molecular weight of 1000 to 10,000,000, preferably 1000 to 1,000,000, even more preferably 1000 to 100,000 and a viscosity at 25°C of 2 to 1,000,000 $mm^2/s$, preferably 500 to 1,000,000 $mm^2/s$, even more preferably 1000 to 1,000,000 $mm^2/s$, are preferably used.

From the viewpoint of absorptive persistence of component (C), storage stability and hue, it is preferable that when amino-modified dimethylpolysiloxane is used as component (C), its amino group be neutralized. The degree of neutralization is more preferably 0.7 or more to 1.0 or less. The degree of neutralization at this time is a value indicative of the mole ratio of the amino group neutralized by reacting stoichiometrically with an acid used in neutralization, and is specifically a value represented by the following equation (VI).

Degree of neutralization = (number of moles of the stoichiometrically neutralized amino group)/(number of moles of all amino groups in amino-modified dimethylpolysiloxane) (VI)

The water-soluble acid used in neutralization includes hydrochloric acid, acetic acid, citric acid, succinic acid, fumaric acid, benzoic acid, lactic acid, butyric acid, phosphoric acid and sulfuric acid. These acids may be used either alone or in combinations of two or more. Among these acids, hydrochloric acid, acetic acid, citric acid and lactic acid are preferable, and hydrochloric acid and citric acid are particularly preferable.

In the composition of the present invention, the ratio of the total mass of the components (A) and (B) to the total mass of the components (A), (B) and (C), which is represented by formula (VII) below, is preferably 5 to 85% by mass, more preferably 10 to 80% by mass.

$$[(A) + (B)]/[(A) + (B) + (C)] \times 100\ (\%) \qquad (VII)$$

From the viewpoint of giving excellent wrinkle prevention performance and finish feel, the total amount of the components (A), (B) and (C) in the treatment composition for textile products of the present invention is preferably 0.1 to 50.0% by mass, more preferably 0.1 to 30.0% by mass, even more preferably 1.0 to 30.0% by mass, even more preferably 2.0 to 20.0% by mass.

When the treatment composition for textile products of the present invention is used in a drying machine, the total amount of the components (A), (B) and (C) is preferably 0.001 to 10.0% by mass, more preferably 0.01 to 7.0% by mass, based on textile products.

For the object of promoting the adsorption of component (C) onto textile products to reduce friction among fibers, the treatment composition for textile products of the present invention preferably contains a cationic surfactant as component (D).

Component (D) is preferably at least one member selected from a tertiary amine, known as a general softener, having one or two of three groups bound to a nitrogen atom are a hydrocarbon group having 10 to 20 carbon atoms and

the remainder groups are a hydrocarbon group which has 1 to 3 carbon atoms and may be substituted with a hydroxy group, an acid salt thereof and a quaternary product thereof. Specific examples include tertiary amines represented by formula (VIII), acid salts thereof and quaternary products thereof:

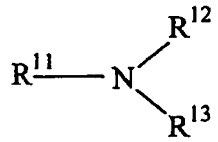

(VIII)

wherein $R^{11}$ represents a hydrocarbon group having 10 to 20 carbon atoms, $R^{12}$ represents a hydrocarbon group having 10 to 20 carbon atoms or a hydrocarbon group which has 1 to 3 carbon atoms and may be substituted with a hydroxy group, and $R^{13}$ represents a hydrocarbon group which has 1 to 3 carbon atoms and may be substituted with a hydroxy group.

In the formula (VIII), $R^{11}$ is preferably an alkyl group and/or an alkenyl group having 10 to 20 carbon atoms, even more preferably an alkyl group having 12 to 18 carbon atoms, $R^{12}$ is preferably an alkyl group and/or an alkenyl group having 10 to 20 carbon atoms, even more preferably an alkyl group having 12 to 18 carbon atoms or an alkyl group having 1 to 3 carbon atoms, even more preferably a methyl group. $R^{13}$ is preferably an alkyl group having 1 to 3 carbon atoms, even more preferably a methyl group. Examples of the acid salts of the tertiary amine include salts of inorganic acids such as hydrochloric acid, nitric acid, phosphoric acid or sulfuric acid and salts of organic acids such as acetic acid, lactic acid, glycolic acid, citric acid, succinic acid or maleic acid. Also, examples of the quaternary products of the tertiary amine include those formed using an alkyl halide, such as methyl chloride, having 1 to 4 carbon atoms or a dialkyl sulfate having 2 to 6 carbon atoms.

From the viewpoint of attaining excellent wrinkle prevention performance, the content of component (D) in the composition of the present invention is preferably 0.1 to 10.0% by mass, more preferably 0.1 to 8.0% by mass.

For the purpose of improving the emulsification stability and adsorptive property of component (C), the treatment composition for textile products of the present invention preferably contains a nonionic surfactant as component (E).

Component (E) includes a polyoxyethylene alkyl ether-based nonionic surfactant having an HLB of 5 to 18, preferably 6 to 16 (hereinafter referred to as component (E1)) and a compound represented by formula (IX) (hereinafter referred to as component (E2)):

$$R^{14}\text{-O- }[(EO)_x/(PO)_y]\text{ -H} \qquad (IX)$$

wherein $R^{14}$ represents an alkyl or alkenyl group having 10 to 24 carbon atoms on average, preferably 10 to 14 carbon atoms, EO is an oxyethylene group, PO is an oxypropylene group, x is a number of 2 to 100 indicative of the number of EO moles added on average, y is a number of 0 to 2 indicative of the number of PO moles added on average, and $(EO)_x/(PO)_y$ may be a random or block adduct of EO and PO.

Component (E1) is preferably a polyoxyethylene alkyl ether wherein the number of carbon atoms in the alkyl group is 10 to 24, preferably 10 to 18, and the number-average mole number of oxyethylene group is 2 to 100, more preferably a polyoxyethylene alkyl ether wherein the number of carbon atoms in the alkyl group is 10 to 24, preferably 10 to 18, more preferably 10 to 14, and the number-average mole number of oxyethylene group is 2 to 50.

Component (E2) may be a usually commercially available product or can be produced by adding ethylene oxide and propylene oxide to the alcohol having an alkyl or alkenyl group represented by $R^{14}$ which is synthesized by a known method or derived from natural oils and fats.

In the present invention, the components (E1) and (E2) are preferably simultaneously used, and combined use of the two is useful in not only improving the emulsification stability of component (C) but also improving the absorptive property of component (C) upon dilution to improve wrinkle prevention performance.

From the viewpoint of attaining excellent wrinkle prevention performance, the content of component (E) in the composition of the present invention is preferably 0.01 to 20.0% by mass, more preferably 0.1 to 10.0% by mass.

The treatment composition for textile products of the present invention can contain an organic solvent as component (F) in order to obtain a preferable appearance of a solution and improve storage stability, but because of the problem of flash point and smell, the content of component (F) is preferably 0 to 40.0% by mass, more preferably 0.01 to 30.0% by mass, even more preferably 0.1 to 20.0% by mass.

Component (F) is preferably a water-soluble organic solvent having a hydroxyl group and/or an ether group. Examples of component (F) include the following compounds (F1) to (F6) and it is preferable to use one or more of these compounds.

(F1) Alkanols such as ethanol, propanol, isopropanol, and 1-butanol.

(F2) Polyhydric alcohols such as ethylene glycol, propylene glycol, butylene glycol, hexylene glycol, and glycerin.
(F3) Polyglycols such as diethylene glycol, triethylene glycol, tetraethylene glycol, polyethylene glycol having an average molecular weight of about 200, polyethylene glycol having an average molecular weight of about 400, dipropylene glycol, tripropylene glycol, and polypropylene glycol having an average molecular weight of about 1000.
(F4) Alkyl ethers such as diethylene glycol monomethyl ether, diethylene glycol dimethyl ether, triethylene glycol monomethyl ether, diethylene glycol monoethyl ether, diethylene glycol diethyl ether, dipropylene glycol monomethyl ether, dipropylene glycol monoethyl ether, tripropylene glycol monomethyl ether, 1-methoxy-2-propanol, 1-ethoxy-2-propanol, 1-methyl glyceryl ether, 2-methyl glyceryl ether, 1,3-dimethyl glyceryl ether, 1-ethyl glyceryl ether, 1,3-diethyl glyceryl ether, triethyl glyceryl ether, 1-pentyl glyceryl ether, 2-pentyl glyceryl ether, 1-octyl glyceryl ether, 2-ethylhexyl glyceryl ether, and diethylene glycol monobutyl ether.
(F5) Aromatic ethers such as 2-phenoxy ethanol, diethylene glycol monophenyl ether, triethylene glycol monophenyl ether, polyethylene glycol monophenyl ether having an average molecular weight of about 480, 2-benzyloxy ethanol, and diethylene glycol monobenzyl ether.
(F6) Alkanolamines such as 2-amino ethanol, N-methylethanolamine, N,N-dimethylethanolamine, N,N-diethylethanolamine, diethanolamine, N-methyldiethanolamine, N-butyldiethanolamine, triethanolamine, triisopropanolamine, and isopropanolamine mixtures (mixtures of mono, di and tri-amines).

As component (F), ethanol, propanol, isopropanol, ethylene glycol, propylene glycol, glycerin, dipropylene glycol, 1-pentyl glyceryl ether, 2-pentyl glyceryl ether, 2-ethylhexyl glyceryl ether, and diethylene glycol monobutyl ether are appropriate, and particularly, ethanol, ethylene glycol, propylene glycol, dipropylene glycol, 2-ethylhexyl glyceryl ether, and diethylene glycol monobutyl ether are preferable.
Although a surfactant (an anionic surfactant, an amphoteric surfactant) other than the components may be used together in the treatment composition for textile products of the present invention with the intention of further improving performance, considerable care must be taken in its use because if the surfactant is compounded excessively, it adheres to textile products to give starchy feel so that the comfortable feel of these products is impaired.
Examples of the anionic surfactant may include alkylbenzene sulfonates having an alkyl group having 10 to 15 carbon atoms, alkyl sulfates having an alkyl group having 10 to 24 carbon atoms, polyoxyethylene alkyl sulfates having an alkyl group having 10 to 24 carbon atoms and an oxyethylene group having a number-average addition mol number of 1 to 6, $\alpha$-olefin sulfonates having 10 to 24 carbon atoms, and $\alpha$-sulfofatty acid methyl esters having 10 to 24 carbon atoms in the fatty acid moiety.
Examples of the amphoteric surfactant may include alkyldimethylamine oxides with an alkyl group having 10 to 24 carbon atoms, alkanoylamidopropyldimethylamine oxides with an alkanoyl group having 10 to 24 carbon atoms, N-alkyl-N,N-dimethyl-N-(2-hydroxy-3-sulfopropyl)ammoniumbetaines and N-alkyl-N,N-dimethyl-N-carboxymethylammoniumbetaines with an alkyl group having 10 to 24 carbon atoms, and N-alkanoylaminopropyl-N,N-dimethyl-N-(2-hydroxy-3-sulfopropyl)ammoniumbetaines and N-alkanoylaminopropyl-N,N-dimethyl-N-carboxymethylammoniumbetaines with an alkanoyl group having 10 to 24 carbon atoms.
The treatment composition for textile products of the present invention may further contain components that are to be added in general liquid compositions: specifically, it may contain, for example, an antiseptic, perfumes, pigments, dyes, hydrotropic agent, thickener, gelling preventive and antioxidant.
The treatment composition for textile products of the present invention may be any of opaque (as in an emulsion) to transparent in appearance (transmitting light so as to be optically transparent).
The treatment composition for textile products of the present invention is in the form of an aqueous solution prepared by dissolving the components in water, and the content of water in the composition is preferably 20.0 to 90.0% by mass, more preferably 30.0 to 80.0% by mass, even more preferably 40.0 to 70.0% by mass. The pH of the solution is preferably 1 to 9, more preferably 2 to 7 and even more preferably 3 to 7 from the viewpoint of dissolution and dispersion stability. When the composition is adjusted to such a pH, a usual acid such as sulfuric acid, hydrochloric acid, phosphoric acid, acetic acid, citric acid, lactic acid and succinic acid and a usual alkali agent such as sodium hydroxide, potassium hydroxide, sodium carbonate and potassium carbonate may be used.

Method of Treating Textile Products

The form of usage of the treatment composition for textile products of the present invention includes the following (1) to (5), preferably a method wherein textile products after washing are treated by adding the treatment composition for textile products of the present invention in a rinsing step and/or before a rinsing step and then treated by heating with a heating drying machine.

(1) A method wherein textile products are treated by adding the treatment composition to rinsing water at a rinsing stage in a step of washing textile products.

(2) A method wherein textile products are treated by the method (1) and then dehydrated, and the treated textile products are placed and heat-treated in a heating drying machine.

(3) A method wherein textile products are heat-treated in the continuous operation of from washing to drying in a drying and washing machine having both a washing function and a drying function.

(4) A method wherein textile products are sprayed with the treatment composition by a sprayer such as a trigger container and then placed and heat-treated in a heating drying machine.

(5) A method wherein textile products as the subject of treatment are heat-treated by introducing them together with a product having a flexible absorber impregnated with the treatment composition, into a heating drying machine.

When the method (1), (2) or (3) is used, the liquor ratio (water/textile product ratio by mass) is preferably 3 to 30, more preferably 4 to 30. The rinsing conditions under which component (A) or the components (A) and (B) are efficiently adsorbed into textile products are selected preferably by considering the amount of the components used and the liquor ratio. In this method, the treatment composition of the present invention is used such that the amount of component (A) or the total amount of the components (A) and (B) reaches 0.005 to 10.0 g, preferably 0.05 to 5.0 g, per kg of textile products. When a drying machine is used, the heat treatment temperature is preferably 40 to 120°C, more preferably 50 to 100°C, and the heat treatment time is about 5 to 400 minutes, although varying depending on the functions of a drying machine and a washing and drying machine.

When the treatment composition of the present invention is added during rinsing in the method (1), (2) or (3), the treatment composition is added such that the concentration of component (A) or the total concentration of the components (A) and (B) reaches preferably 0.001 to 1000 ppm, more preferably 0.01 to 100 ppm, in water.

The sprayer used in the method (4) is preferably a trigger type sprayer, and the sprayer jetting the treatment composition of the present invention in an amount of 0.1 g to 2.0 g, preferably 0.2 to 1.5 g and even more preferably 0.3 to 1.0 g per stroke is satisfactory. The trigger type sprayer used in the present invention is preferably an accumulator type trigger superior particularly in uniform spraying as shown in JP-U 4-37554. The trigger type sprayer is preferably the one so designed that the area exposed to the liquid sprayed from a place 15 cm apart therefrom in a horizontal direction parallel to a subject surface (plane) disposed vertically to the ground is 100 to 800 $cm^2$ and preferably 150 to 600 $cm^2$. When the method (4) is used in the present invention, the amount of component (A) or the total amount of the components (A) and (B) in the treatment composition of the present invention introduced into the sprayer is preferably 0.001 to 5.0% by mass, more preferably 0.005 to 3.0% by mass, even more preferably 0.01 to 1.0% by mass, from the viewpoint of spray property. The trigger type sprayer is used such that the amount of component (A) or the total amount of the components (A) and (B) applied per kg of textile products reaches preferably 0.005 to 10.0 g, more preferably 0.05 to 5.0 g.

When the treatment composition of the present invention is used in the method (5), it is preferable that textile products be heat-treated in a heating drying machine, in the presence of a product wherein the composition containing the components (A) and (B) and other components is supported by a flexible absorber. From the viewpoint of uniform adhesion of the components (A) and (B) from the flexible absorber onto textile products, the amount of component (A) or the total amount of the components (A) and (B) in the treatment composition of the present invention used in the method (5) is preferably 0.001 to 5.0% by mass, more preferably 0.005 to 3.0% by mass, even more preferably 0.01 to 1.0% by mass. In the method (5), the treatment composition of the present invention is used such that the amount of component (A) or the total amount of the components (A) and (B) reaches 0.1 to 20.0 g, preferably 0.5 to 8.0 g, per kg of textile products.

In this case, it is preferable that in consideration of the basis weight and thickness of a flexible absorber (suitably selected from the scope of flexible absorbers described below), a flexible absorber to which component (A) can adhere efficiently be used in supporting the treatment composition of the present invention.

The flexible absorber includes paper, fabric, nonwoven fabric, and sponge, which particularly preferably have a porosity of 30 to 90%. The porosity as used herein can be determined by the following equation (X):

$$\text{Porosity (\%)} = [1 - W/(T\times\varepsilon)]\times 100 \qquad (X)$$

wherein W is the mass (g) of a flexible absorber, T is the apparent volume ($cm^3$) of the flexible absorber, and ε is the specific gravity of a material constituting the flexible absorber.

In the present invention, a nonwoven fabric is most preferably used as the flexible absorber. The nonwoven fabric includes wet nonwoven fabrics, dry nonwoven fabrics such as chemically bonded, thermally bonded or air-laid nonwoven fabrics, as well as a spun lace nonwoven, a spunbond nonwoven, a melt-blown nonwoven, a needle-punched nonwoven and/or a stitch-bonded nonwoven. The nonwoven fabric is particularly preferably at least one member selected from a wet nonwoven fabric, a chemically bound nonwoven, a thermally bound nonwoven, a melt-blown nonwoven, and

a spun lace nonwoven. The basis weight of the nonwoven fabric is preferably 10 to 300 $g/m^2$, more preferably 10 to 200 $g/m^2$, even more preferably 15 to 180 $g/m^2$.

As the material for the nonwoven fabric, it is possible to use hydrophobic fibers selected from polypropylene, polyethylene, polyester and polyvinyl chloride and hydrophilic fibers selected from nylon, rayon, acryl, vinylon, polyurethane and cellulose. In the present invention, hydrophobic fibers and hydrophilic fibers can be simultaneously used.

The flexible absorber in the present invention may be in the form of a block or a sheet, preferably a sheet. The thickness of the sheet is preferably 50 to 3000 $\mu$m on average, even more preferably 100 to 2000 $\mu$m, and one or more sheets having a length of about 10 to 30 cm and a width of about 10 to 50 cm depending on the size of a rotary heating drying machine are suitably used.

When the flexible absorber in a sheet form is used, the amount of the treatment composition of the present invention supported by the flexible absorber is preferably 30 to 800 $g/m^2$, more preferably 50 to 600 $g/m^2$, even more preferably 100 to 500 $g/m^2$. The supporting method may be a wet coating method such as a reverse roll coater method, a gravure roll coater method, an opposite knife coater method, an inverse knife coater method, a kiss roll coater method, a spray coat method, an air knife coater method, a dip roller coater method, a direct roller coater method or a brushing method, by which the treatment composition can be supported by the flexible absorber in a sheet form. Particularly a dip roll coating method is preferable for ease in production.

In the method (5), textile products are heat-treated in a heating drying machine in the presence of the treatment composition of the present invention. In this case, the treatment with the treatment composition of the present invention and drying by heating proceed almost simultaneously. In the method (5) similar to the method (1), (2) or (3), the treatment composition of the present invention is used for textile products such that the amount of component (A) or the total amount of the components (A) and (B) reaches preferably 0.005 to 10.0 g, more preferably 0.05 to 5.0 g, per kg of textile products. The treatment temperature in a heating drying machine is preferably 40 to 120°C, more preferably 50 to 100°C, and the treatment time is preferably 5 to 120 minutes, more preferably 10 to 90 minutes.

In the present invention, fibers when treated with the treatment composition are preferably in a wet state. The wet state refers to a state of fibers immersed in a water bath (rinsing bath or the like) or to a state in which the water content of fibers such as those after washing or after dehydration is relatively higher than in fibers in a dry state.

## Examples

The Examples below describe the practice of the present invention. The Examples are merely illustrative of the present invention and are not intended to limit the present invention.

In the Examples that follow, the terms "%" and "part" refer to % by mass and part by mass, respectively, unless otherwise noted.

### Synthesis Example 1

0.55 part of RYOTO Sugar Ester S-770 (manufactured by Mitsubishi-Kagaku Foods Corporation) was dissolved in 479.8 parts of cyclohexane. To this solution was added an aqueous solution prepared by dissolving 13.8 parts (75% aqueous solution) of a dimethylaminopropylacrylamide quaternary salt (DMAPAA-Q manufactured by Kohjin Co., Ltd.), 44.7 parts of N,N-dimethylacrylamide (manufactured by Kohj in Co., Ltd.), and 0.679 part of 2,2'-azobis(2-amidinopropane)dihydrochloride as a polymerization initiator in 75.43 parts of deionized water. The mixture was dispersed with a homomixer until the particle size of the aqueous phase was reduced to 3 to 4 $\mu$m. The resulting dispersion was placed in a 2L separable flask equipped with a stirrer, a thermometer, a nitrogen inlet tube and a reflux condenser, and then the atmosphere in the reaction container was replaced by nitrogen, followed by increasing the temperature of the flask on a bath set at a temperature of 54°C. The internal temperature, once reached 54°C, was kept at this temperature for about 20 minutes and then further increased to about 95°C, thereby distilling away at least 80% of the water in the system by azeotropic dehydration. The finally obtained cyclohexane dispersion was filtered, and the resulting polymerization product was dried at 70°C for 12 hours under reduced pressure in a nitrogen atmosphere to give a polymerization product.

### Synthesis Example 2

0.55 part of RYOTO-Sugar Ester S-770 (manufactured by Mitsubishi-Kagaku Foods Corporation) was dissolved in 479.8 parts of cyclohexane. To this solution was added an aqueous solution prepared by dissolving 13.8 parts (75% aqueous solution) of a dimethylaminopropylacrylamide quaternary salt (DMAPAA-Q manufactured by Kohjin Co., Ltd.), 44.7 parts of N,N-dimethylacrylamide (manufactured by Kohjin Co., Ltd.), 0.0074 part of polyethylene glycol dimethacrylate (NK-14G manufactured by Shin-Nakamura Chemical Co., Ltd.), and 0.679 part of 2,2'-azobis(2-amidinopropane)dihydrochloride as a polymerization initiator in 75.43 parts of deionized water. The mixture was dispersed with a homomixer

until the particle size of the aqueous phase was reduced to 3 to 4 μm. The resulting dispersion was placed in a 2L separable flask equipped with a stirrer, a thermometer, a nitrogen inlet tube and a reflux condenser, and then the atmosphere in the reaction container was replaced by nitrogen, followed by increasing the temperature of the flask on a bath set at a temperature of 54°C. The internal temperature, once reached 54°C, was kept at this temperature for about 20 minutes and then further increased to about 95°C, thereby distilling away at least 80% of the water in the system by azeotropic dehydration. The finally obtained cyclohexane dispersion was filtered, and the resulting polymerization product was dried at 70°C for 12 hours under reduced pressure in a nitrogen atmosphere to give a polymerization product.

Synthesis Example 3

A polymerization product was obtained in the same manner as in Synthesis Example 2 except that under the production conditions in Synthesis Example 2, the amount of the polymerization initiator was the same, and only the amount of the crosslinking agent was changed to 0.018 part.

Synthesis Example 4

A polymerization product was obtained in the same manner as in Synthesis Example 2 except that under the production conditions in Synthesis Example 2, the amount of the polymerization initiator was the same, and only the amount of the crosslinking agent was changed to 0.028 part.

Synthesis Example 5

A stainless steel kneader with an internal volume of 1L equipped with two sigma-type stirring arms and having a jacket with externally circulating oil at 55°C was charged with a previously nitrogen-flushed aqueous monomer solution containing 58.0 parts of a methyl chloride adduct of dimethylaminopropyl methacrylamide (MAPTAC manufactured by Nitto Denko Corporation), 71.37 parts of N,N-dimethylacrylamide, 0.0429 part of polyethylene glycol dimethacrylate (NK-9G manufactured by Shin-Nakamura Chemical Co., Ltd.) and 350 parts of deionized water. While the atmosphere in the system was replaced by nitrogen by blowing a nitrogen gas for 20 to 40 minutes, the temperature of the aqueous monomer solution was increased. Then, 0.22 part of 2,2'-azobis(2-amidinopropane)dihydrochloride was added as a polymerization initiator. 30 minutes to 1 hour after addition of the polymerization initiator, polymerization was initiated to form a soft gel as a whole. The reaction mixture was stirred as such, and 4 hours after addition of the polymerization initiator, a lid of the kneader was removed to terminate the polymerization. The resulting sticky and starchy product was removed, then washed for 5 to 10 minutes in 5 L ethanol under stirring, and dried. Thereafter, the product was milled with a coffee mill and a jet mill. The milled crosslinked particles were classified with High Bolter to give a cationic group-containing copolymer.

Synthesis Example 6

A 1L separable flask equipped with a stirrer, a thermometer, a nitrogen inlet tube and a reflux condenser was charged with 225.0 parts of deionized water and 5.0 parts of isopropyl alcohol. Then, 13.8 parts (75% aqueous solution) of a dimethylaminopropylacrylamide quaternary salt (DMAPAA-Q manufactured by Kohjin Co., Ltd.), 44.68 parts of N,N-dimethylacrylamide (manufactured by Kohj in Co., Ltd.), and 0.68 part of 2,2'-azobis(2-amidinopropane)dihydrochloride as a polymerization initiator was dissolved therein, and then the atmosphere in the reaction container was replaced by nitrogen, followed by initiating heating and stirring under the condition of a nitrogen stream to perform polymerization at 60°C for 5 hours. From the resulting reaction solution, the isopropyl alcohol was distilled away under reflux with an evaporator. A suitable amount of water was added to the resulting aqueous solution which was then freeze-dried to give a polymerization product.

Synthesis Example 7

A 1L separable flask equipped with a stirrer, a thermometer, a nitrogen inlet tube and a reflux condenser was charged with 225.0 parts of deionized water and 5.0 parts of isopropyl alcohol. Then, 13.8 parts (75% aqueous solution) of a dimethylaminopropylacrylamide quaternary salt (DMAPAA-Q manufactured by Kohjin Co., Ltd.), 44.68 parts of N,N-dimethylacrylamide (manufactured by Kohj in Co., Ltd.), and 0.23 part of 2,2'-azobis(2-amidinopropane)dihydrochloride as a polymerization initiator was dissolved therein, and then the atmosphere in the reaction container was replaced by nitrogen, followed by initiating heating and stirring under the condition of a nitrogen stream to perform polymerization at 60°C for 5 hours. From the resulting reaction solution, the isopropyl alcohol was distilled away under reflux with an

evaporator. A suitable amount of water was added to the resulting aqueous solution which was then freeze-dried to give a polymerization product.

Synthesis Example 8

A polymerization product was obtained in the same manner as in Synthesis Example 6 except that the amounts of deionized water and isopropyl alcohol were changed to 227.5 parts and 2.5 parts, respectively.

Synthesis Example 9

A polymerization product was obtained in the same manner as in Synthesis Example 6 except that the amounts of deionized water was changed to 230. 0 parts, and isopropyl alcohol was not added.

Synthesis Example 10

A polymerization product was obtained in the same manner as in Synthesis Example 6 except that the amounts of deionized water and isopropyl alcohol were changed to 81.0 parts and 230.0 parts, respectively.

Synthesis Example 11

A polymerization product was obtained in the same manner as in Synthesis Example 6 except that the amounts of deionized water and isopropyl alcohol were changed to 178.0 parts and 52.0 parts, respectively.

Synthesis Example 12

A polymerization product was obtained in the same manner as in Synthesis Example 6 except that the amounts of deionized water and isopropyl alcohol were changed to 216.0 parts and 14.0 parts, respectively.

The polymerization products obtained in Synthesis Examples 1 to 12, Merquat 550 (poly(diallyldimethyl ammonium chloride/acrylamide (= 1/1) manufactured by Nalco Co.) and Sulcare SC11 (poly(diallyldimethyl ammonium chloride/acrylamide (= 3/7) manufactured by Ciba Specialty Chemical Co., ltd.), which were used as water-soluble polymers in the following Examples, and poly(diallyldimethyl ammonium chloride (PAS-A-5 manufactured by Nitto Boseki Co., Ltd.) and poly(diallyldimethyl ammonium chloride (PAS-A-120L manufactured by Nitto Boseki Co., Ltd.), which were used as comparative water-soluble polymers, were measured for the ratio of water-soluble component by the following method, and the water-soluble component was measured for its weight-average molecular weight by the following method. The results are shown in Table 1.

<Method of Quantitatively Determining the Water-Soluble Component>

An aqueous dispersion containing the polymerization product at a concentration of 0.05% was prepared and then dissolved and dispersed under stirring at 40°C for 5 to 6 hours. The resulting liquid was filtered through a membrane filter (made of cellulose acetate, 0.45 μm), and the filtrate was measured by GPC. From the area of the resulting chromatogram and the area of a non-crosslinked product prepared by the same method, the ratio of the water-soluble component was determined.

<Method of Measuring Weight-Average Molecular Weight>

The molecular weight was measured by gel permeation chromatography (GPC) under the following measurement conditions.
Unit: HLC-8120 manufactured by Tosoh Corporation
GPC columns: α-M (two columns) manufactured by Tosoh Corporation
Eluent: 0.1 M $Na_2SO_4$/1% $CH_3COOH$/water
Flow rate: 1 mL/min
Column temperature: 40°C
Detector: RI
Sample concentration: 2.5 mg/ml (diluted with an eluent)
Injection volume: 100 μL
Molecular-weight standard curve: curve with pullulan standards

Table 1

| | Ratio of water-soluble components (mass%) | Weight-average molecular weight (Mw) (pullulan-equivalent Mw by GPC) |
|---|---|---|
| Merquat 550 | 100 | 2580000 |
| Sulcare SC11 | 100 | 1800000 |
| Polymerization product in synthesis Example 1 | 100 | 4290000 |
| Polymerization product in synthesis Example 2 | 87.3 | 4340000 |
| Polymerization product in synthesis Example 3 | 39.6 | 2610000 |
| Polymerization product in synthesis Example 4 | 0.1 | (unmeasuable due to very small recovery) |
| Polymerization product in synthesis Example 5 | 70 | 3700000 |
| Polymerization product in synthesis Example 6 | 100 | 805000 |
| Polymerization product in synthesis Example 7 | 100 | 1100000 |
| Polymerization product in synthesis Example 8 | 100 | 1468000 |
| Polymerization product in synthesis Example 9 | 100 | 3081000 |
| PAS-A-5 | 100 | 85000 |
| PAS-A-120L | 100 | 395000 |
| Polymerization product in synthesis Example 10 | 100 | 20000 |
| Polymerization product in synthesis Example 11 | 100 | 108000 |
| Polymerization product in synthesis Example 12 | 100 | 394000 |

Examples 1 to 7, 10, 11 and 13 to 16, and Comparative Examples 1 and 5 to 7

The components shown below were used to prepare 150 g each of treatment compositions for textile products shown in Tables 2 and 3. For preparation, a polypropylene plastic cup (volume 200 mL) was used as a mixing container, and a magnetic stirrer was used for mixing. First, the components (A) to (F) were mixed, then stirred for about 30 minutes and adjusted to predetermined pH with hydrochloric acid to produce each composition.

The resulting composition was used in treatment of clothes in the following method to evaluate wrinkle prevention performance. The results are shown in Tables 2 and 3.

Component (A)

A-1: Merquat 550 (poly(diallyldimethyl ammonium chloride/acrylamide (= 1/1) manufactured by Nalco Co.)

A-2: Sulcare SC11 (poly(diallyldimethyl ammonium chloride/acrylamide (= 3/7) manufactured by Ciba Specialty Chemical Co., ltd.)

A-3: The polymerization product in Synthesis Example 1

A-4: The water-soluble component in the polymerization product in Example 2
A-5: The water-soluble component in the polymerization product in Example 3
A-6: The water-soluble component in the polymerization product in Example 5
A-7: The polymerization product in Synthesis Example 6
A-8: The polymerization product in Synthesis Example 7
A-9: The polymerization product in Synthesis Example 8
A-10: The polymerization product in Synthesis Example 9 Component (A') (comparative product of component (A))
A'-1: Poly(diallyldimethyl ammonium chloride (PAS-A-5 manufactured by Nitto Boseki Co., Ltd.)
A'-2: Poly(diallyldimethyl ammonium chloride (PAS-A-120L manufactured by Nitto Boseki Co., Ltd.)
A'-3: The polymerization product in Synthesis Example 10
A'-4: The polymerization product in Synthesis Example 11
A'-5: The polymerization product in Synthesis Example 12 Component (B)
B-1: The water-insoluble component in the polymerization product in Synthesis Example 2
B-2: The water-insoluble component in the polymerization product in Synthesis Example 3
B-3: The polymerization product in Synthesis Example 4
B-4: The water-insoluble component in the polymerization product in Synthesis Example 5

Component (C)

C-1: Monoamino-modified silicone (KF864, amino equivalent 3, 800 g/mol, kinetic viscosity 1, 700 $mm^2/s$ (25°C), manufactured by Shin-Etsu Chemical Co., Ltd.)
C-2: Aminopolyether-modified silicone (SS-3588, amino equivalent 1250 g/mol, kinetic viscosity 49,000 $mm^2/s$ (25°C), manufactured by Dow Corning Toray CO., ltd.) C-3: Polyether-modified silicone (FZ2203, kinetic viscosity 5, 000 $mm^2/s$ (25°C), manufactured by Dow Corning Toray CO., ltd) Component (D)
D-1: Coatamine D24E (cationic surfactant, dilauryldimethyl ammonium chloride, manufactured by Kao Corporation) Component (E)
E-1: Emulgen KS108 (nonionic surfactant, polyoxyethylene lauryl ether (number of EO moles added on average, 8; number of PO moles added on average, 2; random adduct), manufactured by Kao Corporation)
E-2: Softanol 33 (nonionic surfactant, polyoxyethylene alkyl ether (C12 to C14 linear secondary alcohol/EO adduct; number of EO moles added on average, 3) manufactured by Nippon Shokubai Co., Ltd.)
E-3: Emulgen 140 (nonionic surfactant, polyoxyethylene lauryl ether (number of EO moles added on average, 40), manufactured by Kao Corporation)

Component (F)

F-1: Diethylene glycol monobutyl ether

<Method of Treating Clothes>

• Standard use of a washing and drying machine

As clothes for evaluation, one new polo shirt (100% cotton, blue, manufactured by BIG JEMUSON), one new T-shirt (100% cotton, yellow, manufactured by Gunze Limited) and an underwear (100% cotton, yellow, manufactured by Gunze Limited) were washed repeatedly 3 times using a commercially available weak-alkaline detergent (Attack, manufactured by Kao Corporation) in a twin-tub type washing machine (Toshiba Ginga VH-360S1) (detergent concentration: 0.0667% by mass, using 36 L (20°C) of tap water, washing (10 minutes)-dewatering (3 minutes)-rinsing until foams disappeared (rinsing in water stream, amount of water: 15 L/min.)).

These clothes plus clothes for regulation of mass, that is, an underwear (100% cotton) and a shirt (white, cotton/polyester = 60/40 (wt/wt)), the total weight of which was 3.5 kg, were subjected to a continuous operation of from washing to drying in a washing and drying machine (Toshiba TW-80TB) under standard use conditions. 26.25 g of the detergent and 50.0 g treatment compositions shown in Tables 2 and 3 were used by introducing them in detergent and softener automatic slots of the washing and drying machine respectively. The treatment composition was introduced into the softener slot, and thus the fibers were treated in a rinsing step after washing and heat-treated in a drying step. After drying was finished, the polo shirt, T-shirt and the underwear as the clothes for evaluation were removed, hung with a hanger and evaluated for wrinkle prevention.

• Regulation of clothes for evaluation (drying in a hanging condition)

As clothes for evaluation, one new polo shirt (100% cotton, blue, manufactured by BIG JEMUSON), one new T-shirt (100% cotton, yellow, manufactured by Gunze Limited) and an underwear (100% cotton, yellow, manufactured by Gunze Limited) were washed repeatedly 3 times using a commercially available weak-alkaline detergent (Attack, manufactured by Kao Corporation) in a twin-tub type washing machine (Toshiba Ginga VH-360S1) (detergent concentration: 0.0667% by mass, using 36 L (20°C) of tap water, washing (10 minutes)-dewatering (3 minutes)-rinsing until foams disappeared (rinsing in water stream, amount of water: 15 L/min.)) and dried at room temperature.

These clothes plus clothes for regulation of mass, that is, an underwear (100% cotton) and a shirt (white, cotton/polyester = 60/40 (wt/wt)), the total weight of which was 3.5 kg, were subjected to a washing operation in a washing and drying machine (Toshiba TW-80TB). 26.25 g of the detergent and 50.0 g treatment compositions shown in Tables 2 and 3 were used by introducing them in detergent and softener automatic slots of the washing and drying machine respectively. The treatment composition was introduced into the softener slot, and thus the fibers were treated in a rinsing step after washing. After dewatering was finished, the polo shirt, T-shirt and the underwear as the clothes for evaluation were removed, hung with a hanger respectively and dried in a hanging condition for 12 hours, and the wrinkle prevention performance of the dried clothes was evaluated. The clothes obtained by this regulation method, unlike those obtained by using a drying machine, did not generate large and deep wrinkles.

<Method of Evaluating Wrinkle Prevention Performance>

The wrinkle prevention performance of the dried clothes treated by the method was evaluated by a panel of 5 examiners. In evaluation of the degree of wrinkles on the clothes, wrinkle levels 1, 2, 3 and 4 shown below were given as scales for wrinkle grade and scored in 0.5-point increments by the panel of 5 examiners, and the average value was determined as wrinkle level.

The wrinkle grade 3 was a state of clothes when dried in a hanging condition, the wrinkle grade 1 was a state of clothes that have generated large bent wrinkles as a result of drying by heating of at least 3.5 kg of the clothes introduced into a washing and drying machine and subjected to a continuous operation of from washing to drying. The level of clothes that can be confirmed to be effectively prevented from generating wrinkles because the clothes are apparently free of wrinkles and are good-looking is the wrinkle grade 2 or more. In this evaluation method, a wrinkle level value of 0.5 point is a significant difference.

• Wrinkle Grade

4: No wrinkle remains.
3: Few wrinkles remain.
2: A few wrinkles remain.
1: Wrinkles remain.

Examples 8 to 9 and 12, and Comparative Examples 2 to 4

Clothes were treated with the treatment compositions for textile products shown in Tables 2 and 3 in the same manner as in.Examples 1 to 7 except that the compositions were used in the amounts shown in Tables 2 and 3, and the wrinkle prevention performance of the compositions was evaluated. The results are shown in Tables 2 and 3. Comparative Example 2 is an example where treatment with the treatment composition was not carried out.

Table 2

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Treatment composition for Textile Products (%) | Component (A) | A−1 | 1.0 | − | − | − | − | − | − | − | − | − | − | − |
| | | A−2 | − | 1.0 | − | − | − | − | − | − | − | − | − | − |
| | | A−3 | − | − | 1.0 | − | − | 0.9 | − | 3.0 | − | − | − | − |
| | | A−4 | − | − | − | 0.9 | − | − | − | − | − | − | − | 3.1 |
| | | A−5 | − | − | − | − | 0.6 | − | 0.6 | − | 1.8 | − | 3.2 | − |
| | | A−6 | − | − | − | − | − | − | − | − | − | 2.0 | − | − |
| | | A−7 | − | − | − | − | − | − | − | − | − | − | − | − |
| | | A−8 | − | − | − | − | − | − | − | − | − | − | − | − |
| | | A−9 | − | − | − | − | − | − | − | − | − | − | − | − |
| | | A−10 | − | − | − | − | − | − | − | − | − | − | − | − |
| | Component (A') | A'−1 | − | − | − | − | − | − | − | − | − | − | − | − |
| | | A'−2 | − | − | − | − | − | − | − | − | − | − | − | − |
| | | A'−3 | − | − | − | − | − | − | − | − | − | − | − | − |
| | | A'−4 | − | − | − | − | − | − | − | − | − | − | − | − |
| | | A'−5 | − | − | − | − | − | − | − | − | − | − | − | − |
| | Component (B) | B−1 | − | − | − | 0.1 | − | − | − | − | − | − | − | 0.5 |
| | | B−2 | − | − | − | − | 0.4 | − | 0.4 | − | 1.2 | − | 1.8 | − |
| | | B−3 | − | − | − | − | − | 0.1 | − | − | − | − | − | − |
| | | B - 4 | − | − | − | − | − | − | − | − | − | 0.85 | − | − |
| | Component (C) | C−1 | 5.0 | 5.0 | 5.0 | 5.0 | 5.0 | 5.0 | 1.5 | − | − | 3.0 | − | 2.0 |
| | | C−2 | − | − | − | − | − | − | 5.5 | − | − | − | − | 1.5 |
| | | C−3 | 2.0 | 2.0 | 2.0 | 2.0 | 2.0 | 2.0 | − | − | − | 3.0 | 1.5 | − |
| | Component (D) | D−1 | 4.0 | 4.0 | 4.0 | 4.0 | 4.0 | 4.0 | 0.5 | − | − | 2.0 | 3.5 | 2.0 |
| | Component (E) | E−1 | 3.0 | 3.0 | 3.0 | 3.0 | 3.0 | 3.0 | − | − | − | 4.0 | 4.0 | 2.0 |
| | | E−2 | 3.0 | 3.0 | 3.0 | 3.0 | 3.0 | 3.0 | − | − | − | 2.0 | − | − |
| | | E−3 | − | − | − | − | − | − | 4.0 | − | − | − | 4.0 | 2.0 |
| | Component (F) | F−1 | 5.0 | 5.0 | 5.0 | 5.0 | 5.0 | 5.0 | 3.5 | − | − | 3.0 | 1.0 | 2.0 |
| | Water | | Balance | Balance | Balance | Balance | Balance | Balance | Balance | Balance | Balance | Balance | Balance | Balance |
| pH (neutralizing acid) | | | 4.0 (hydrochloric acid) | | | | | | | | | 3.5 (hydrochloric acid) | 6.0 (hydrochloric acid) | 4.0 (hydrochloric acid) |
| Treatment method | | | treated by an automatic laundry machine or a hand-washing laundry rinse basin | | | | | | | | | | | |
| Amount (g) of treatment composition (relative to 3.5kg clothes) | | | 50.0 | | | | | | | 75.0 | | 50.0 | | 75.0 |
| Wrinkle prevention performance (average score) | cotton polo shirt | | 2.8 | 2.8 | 3.0 | 3.2 | 3.2 | 3.2 | 3.0 | 2.5 | 2.8 | 2.8 | 2.5 | 2.5 |
| | cotton T-shirt | | 2.6 | 2.6 | 2.8 | 3.0 | 2.8 | 3.0 | 3.0 | 2.0 | 2.2 | 2.8 | 2.0 | 2.0 |
| | Cotton underwear | | 2.5 | 2.0 | 2.6 | 2.7 | 2.6 | 2.6 | 2.5 | 2.3 | 2.3 | 2.5 | 2.3 | 2.5 |

Table 3

| | | | Example | | | | Comparative example | | | | | | |
|---|---|---|---|---|---|---|---|---|---|---|---|---|---|
| | | | 13 | 14 | 15 | 16 | 1 | 2 | 3 | 4 | 5 | 6 | 7 |
| Treatment composition for Textile Products (%) | Component (A) | A-1 | - | - | - | - | - | - | - | - | - | - | - |
| | | A-2 | - | - | - | - | - | - | - | - | - | - | - |
| | | A-3 | - | - | - | - | - | - | - | - | - | - | - |
| | | A-4 | - | - | - | - | - | - | - | - | - | - | - |
| | | A-5 | - | - | - | - | - | - | - | - | - | - | - |
| | | A-6 | - | - | - | - | - | - | - | - | - | - | - |
| | | A-7 | 1.0 | - | - | - | - | - | - | - | - | - | - |
| | | A-8 | - | 1.0 | - | - | - | - | - | - | - | - | - |
| | | A-9 | - | - | 1.0 | - | - | - | - | - | - | - | - |
| | | A-10 | - | - | - | 1.0 | - | - | - | - | - | - | - |
| | Component (A') | A'-1 | - | - | - | - | - | - | 2.0 | - | - | - | - |
| | | A'-2 | - | - | - | - | - | - | - | 2.0 | - | - | - |
| | | A'-3 | - | - | - | - | - | - | - | - | 1.0 | - | - |
| | | A'-4 | - | - | - | - | - | - | - | - | - | 1.0 | - |
| | | A'-5 | - | - | - | - | - | - | - | | - | - | 1.0 |
| | Component (B) | B-1 | - | - | - | - | - | - | - | - | - | - | - |
| | | B-2 | - | - | - | - | - | - | - | - | - | - | - |
| | | B-3 | - | - | - | - | - | - | - | - | - | - | - |
| | | B-4 | - | - | - | - | - | - | - | - | - | - | - |
| | Component (C) | C-1 | 5.0 | 5.0 | 5.0 | 5.0 | 5.0 | - | 5.0 | 5.0 | 5.0 | 5.0 | 5.0 |
| | | C-2 | - | - | - | - | - | - | - | - | - | - | - |
| | | C-3 | 2.0 | 2.0 | 2.0 | 2.0 | 2.0 | - | 2.0 | 2.0 | 2.0 | 2.0 | 2.0 |
| | Component (D) | D-1 | 4.0 | 4.0 | 4.0 | 4.0 | 4.0 | - | 3.0 | 3.0 | 4.0 | 4.0 | 4.0 |
| | Component (E) | E-1 | 3.0 | 3.0 | 3.0 | 3.0 | 3.0 | - | 3.0 | 3.0 | 3.0 | 3.0 | 3.0 |
| | | E-2 | 3.0 | 3.0 | 3.0 | 3.0 | 3.0 | - | 3.0 | 3.0 | 3.0 | 3.0 | 3.0 |
| | | E-3 | - | - | - | - | - | - | - | - | - | - | - |
| | Component (F) | F-1 | 5.0 | 5.0 | 5.0 | 5.0 | 5.0 | - | 3.0 | 3.0 | 5.0 | 5.0 | 5.0 |
| | Water] | | balance | balance | balance | balance | balance | 100 | balance | balance | balance | balance | balance |
| pH (neutralizing acid) | | | 4.0 (hydrochloric acid) | | | | 4.0 (hydrochloric acid) | - | 4.0 (hydrochloric acid) | | | | |
| Treatment method | | | treated by an automatic laundry machine or a hand-washing laundry rinse basin | | | | treated by an automatic laundry machine or a hand-washing laundry rinse basin | None | treated by an automatic laundry machine or a hand-washing laundry rinse basin | | | | |
| Amount (g) of treatment composition (relative to 3.5kg clothes) | | | 50.0 | | | | 50.0 | None | 75.0 | | 50.0 | | |
| Wrinkle prevention performance (average score) | | cotton polo shirt | 2.5 | 2.8 | 2.2 | 2.5 | 1.0 | 1.0 | 1.0 | 1.2 | 1.4 | 1.8 | 1.8 |
| | | cotton T-shirt | 1.5 | 2.2 | 1.7 | 2.0 | 1.5 | 1.2 | 1.2 | 1.0 | 1.2 | 1.6 | 2.0 |
| | | Cotton underwear | 2.5 | 1.5 | 2.2 | 1.7 | 1.5 | 1.2 | 1.3 | 1.0 | 1.6 | 1.1 | 1.3 |

The treated clothes described in Examples 1 to 16 had softening performance equivalent to that of the commercially available softener.

Examples 17 to 19

The treatment compositions for textile products shown in Table 4 were used in spray treatment by the treatment method shown below, and then evaluated for their wrinkle prevention performance in the same manner as in Examples 1 to 7. The results are shown in Table 4.

<Method of Treating Clothes>

As clothes for evaluation, one newpolo shirt (100% cotton, blue, manufactured by BIG JEMUSON), one new T-shirt (100% cotton, yellow, manufactured by Gunze Limited) and an underwear (100% cotton, yellow, manufactured by Gunze Limited) were washed repeatedly 3 times using a commercially available weak-alkaline detergent (Attack, manufactured by Kao Corporation) in a twin-tub type washing machine (Toshiba Ginga VH-360S1) (detergent concentration: 0. 0667% by mass, using 36 L (20°C) of tap water, washing (10 minutes)-dewatering (3 minutes)-rinsing until foams disappeared (rinsing in water stream, amount of water: 15 L/min.)) and dried at room temperature. These clothes were sprayed uniformly with the treatment composition for textile products in the amount shown in Table 4 by means of a trigger (M3 Trigger manufactured by Mitani Co., Ltd.). These sprayed clothes plus clothes for regulation of mass, that is, an underwear (100% cotton) and a shirt (white, cotton/polyester = 60/40 (wt/wt)), the total weight of which was 3.5 kg, were dried in a washing and drying machine (Toshiba TW-80TB) under standard use conditions.

Table 4

| | | | Example | | |
|---|---|---|---|---|---|
| | | | 17 | 18 | 19 |
| Treatment composition for Textile Products (%) | Component (A) | A-3 | 1.0 | - | - |
| | | A-5 | - | 0.6 | 3.2 |
| | Component (B) | B-2 | - | 0.4 | 1.8 |
| | Component (C) | C-3 | - | - | 1.5 |
| | Component (D) | D-1 | - | - | 3.5 |
| | Component (E) | E-1 | - | - | 4.0 |
| | | E-3 | - | - | 4.0 |
| | Component (F) | F-1 | - | - | 1.0 |
| | Water | | balance | balance | balance |
| pH (neutralizing acid) | | | 4.0 (hydrochloric acid) | | |
| Treatment method | | | spray treatment | | |
| Amount (mL) of treatment composition | | | 100.0 | | 50.0 |
| Wrinkle prevention performance (average score) | cotton polo shirt | | 2.5 | 2.2 | 3.0 |
| | cotton T-shirt | | 2.0 | 2.5 | 2.5 |
| | Cotton underwear | | 2.5 | 2.5 | 2.0 |

The treated clothes described in Examples 17 to 19 had softening performance equivalent to that of the commercial softener.

## Claims

**1.** A treatment composition for textile products for use in a drying machine, which comprises

0.01 - 5.0% by mass, based on the composition of a water-soluble cationic polymer having a weight-average molecular weight of 500,000 to 10,000,000 (hereinafter referred to as component (A)),
0.01 - 5.0% by mass, based on the composition of a water-insoluble cationic polymer (hereinafter referred to as component (B)) and
a silicone compound (hereinafter referred to as component (C)),
wherein the ratio of component (A) to the total mass of the components (A) and (B) is 3 to 100% by mass and the ratio of the total mass of the components (A) and (B) to the total mass of the components (A), (B) and (C) is 5 to 85% by mass,
wherein component (A) is a copolymer comprising at least one of cationic group- containing vinyl monomers represented by formula (I) or (II) (hereinafter referred to as component (a1)) and at least one of nonionic group-containing hydrophilic vinyl monomers having a solubility of not lower than 1 g/100 g in water (20°C), represented by formula (III) or (IV) (referred to hereinafter as component (a2)), wherein component (a1)/component (a2) is 1/99 to 80/20 (mole ratio),

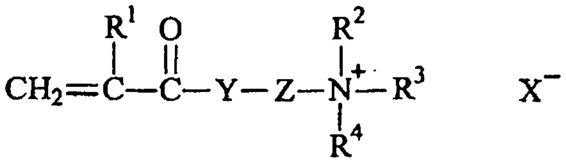

(I)

wherein $R^1$ represents a hydrogen atom or a methyl group, $R^2$ and $R^3$ are the same or different and each represent an alkyl or alkenyl group having 1 to 4 carbon atoms, $R^4$ represents a hydrogen atom or an alkyl group having 1 to 4 carbon atoms, Y represents a -O-, -NH- or $-O-CH_2CH(OH)-$ group, Z represents a linear or branched alkylene group having 1 to 4 carbon atoms, and X represents a conjugate base for acid, a halogen atom or an alkylsulfate group having 1 to 4 carbon atoms;

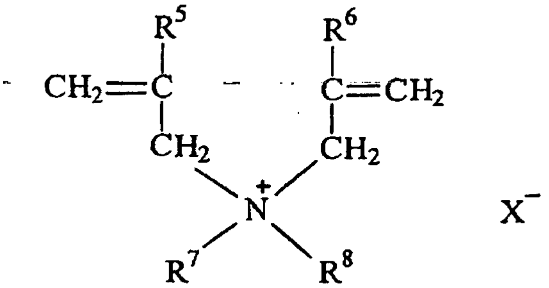

(II)

wherein $R^5$ and $R^6$ are the same or different and each represent a hydrogen atom or a methyl group, $R^7$ and $R^8$ are the same or different and each represent a hydrogen atom or an alkyl group having 1 to 4 carbon atoms, and X has the same meaning as defined above;

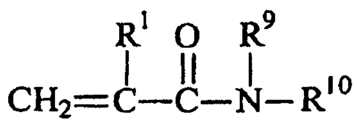

(III)

wherein $R^1$ has the same meaning as defined above, $R^9$ and $R^{10}$ are the same or different and each represent a hydrogen atom or a linear or branched alkyl or alkenyl group which has 1 to 8 carbon atoms and may have a hydroxyl

group; and

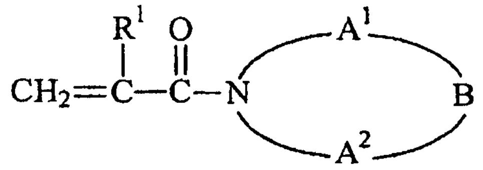

(IV)

wherein $R^1$ has the same meaning as defined above, $A^1$ and $A^2$ are the same or different and each represent a group represented by formula $-(CH_2)_n-$ wherein n is an integer of 2 to 6, and B represents -O- or $-CH_2-$ group, and wherein component (B) is a copolymer comprising, as essential constituent monomers, at least one of cationic group-containing vinyl monomers represented by formula (I) or (II) (hereinafter referred to as component (b1)), at least one of nonionic group-containing hydrophilic vinyl monomers having a solubility of not lower than 1 g/100 g in water (20°C), represented by formula (III) or (IV) (referred to hereinafter as component (b2)), and at least one of crosslinkable vinyl monomers having two or more vinyl groups in the molecule (referred to hereinafter as component (b3)), the copolymer being obtained by radical polymerization of monomer components wherein component (b1)/component (b2) is 1/99 to 80/20 (mole ratio), and the ratio of component (b3) to the total amount of the monomers is 0.001 to 5 mol%.

2. The treatment composition for textile products for use in a drying machine according to claim 1, which is added in a rinsing step after washing of textile products in washing step of textile products and used for reducing wrinkles generated in a drying step.

3. A method of treating textile products, which comprises heat-treating, in a heating drying machine, textile products treated with the treatment composition for textile products for use in a drying machine according to claim 1 or 2.

4. Use of the composition of claim 1 or 2 in a treatment agent for treating textile products in a drying machine.

## Patentansprüche

1. Behandlungszusammensetzung für Textilprodukte zur Verwendung in einer Trocknungsmaschine, umfassend 0,01 - 5,0 Massen-%, bezogen auf die Zusammensetzung eines wasserlöslichen kationischen Polymers mit einem Molekulargewicht im Gewichtsmittel von 500000 bis 10000000 (nachfolgend als Komponente (A) bezeichnet), 0,01 - 5,0 Massen-%, bezogen auf die Zusammensetzung eines wasserunlöslichen kationischen Polymers (nachfolgend als Komponente (B) bezeichnet) und
eine Silikonverbindung (nachfolgend als Komponente (C) bezeichnet),
worin das Verhältnis der Komponente (A) zu der Gesamtmasse der Komponenten (A) und (B) 3 bis 100 Massen-% ist, und
das Verhältnis der Gesamtmasse der Komponenten (A) und (B) zu der Gesamtmasse der Komponenten (A), (B) und (C) 5 bis 85 Massen-% ist,
worin die Komponente (A) ein Copolymer ist, umfassend zumindest einem von kationischen Gruppen enthaltenden Vinylmonomeren mit der Formel (I) oder (II) (nachfolgend als Komponente (a1) bezeichnet) und zumindest einem von nichtionischen Gruppen enthaltenden hydrophilen Vinylmonomeren mit einer Löslichkeit von nicht weniger als 1 g/100 g in Wasser (20°C), dargestellt durch die Formel (III) oder (IV) (nachfolgend als Komponente (a2) bezeichnet), worin Komponente (a1)/Komponente (a2) 1/99 bis 80/20 (Molverhältnis) ist,

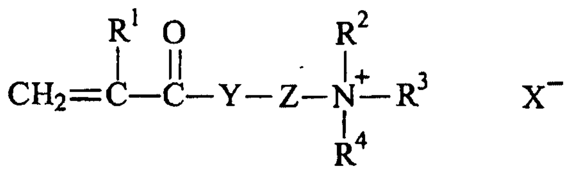

(I)

worin $R^1$ ein Wasserstoffatom oder eine Methylgruppe ist, $R^2$ und $R^3$ gleich oder verschieden sind und jeweils eine

Alkyl- oder Alkenylgruppe mit 1 bis 4 Kohlenstoffatomen sind, $R^4$ ein Wasserstoffatom oder eine Alkylgruppe mit 1 bis 4 Kohlenstoffatomen ist, Y -O-, -NH- oder $-O-CH_2CH(OH)$-Gruppe ist, Z eine lineare oder verzweigte Alkylengruppe mit 1 bis 4 Kohlenstoffatomen ist und X eine Konjugatbase für eine Säure, ein Halogenatom oder eine Alkylsulfatgruppe mit 1 bis 4 Kohlenstoffatomen ist;

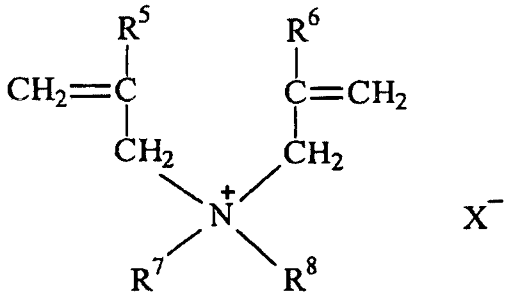

( II )

worin $R^5$ und $R^6$ gleich oder verschieden sind und jeweils ein Wasserstoffatom oder eine Methylgruppe sind, $R^7$ und $R^8$ gleich oder verschieden sind und jeweils ein Wasserstoffatom oder eine Alkylgruppe mit 1 bis 4 Kohlenstoffatomen sind und X die gleiche Bedeutung wie oben definiert aufweist,

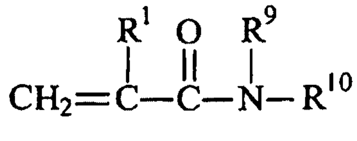

( III )

worin $R^1$ die gleiche Bedeutung wie oben definiert hat, $R^9$ und $R^{10}$ gleich oder verschieden sind und jeweils ein Wasserstoffatom oder eine lineare oder verzweigte Alkyl- oder Alkenylgruppe mit 1 bis 8 Kohlenstoffatomen sind und eine Hydroxylgruppe haben können, und

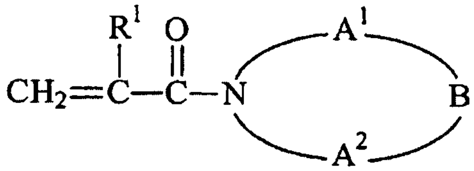

( IV )

worin $R^1$ die gleiche Bedeutung wie oben definiert aufweist, $A^1$ und $A^2$ gleich oder verschieden sind und jeweils eine Gruppe sind, dargestellt durch die Formel $-(CH_2)_n-$, worin n eine ganze Zahl von 2 bis 6 ist und B -O- oder $-CH_2$-Gruppe ist, und

worin die Komponente B ein Copolymer ist, das als essentielle Bestandteilsmonomere zumindest eines von kationischen Gruppen enthaltenden Vinylmonomeren mit der Formel (I) oder (II) (nachfolgend als Komponente (b1) bezeichnet), zumindest eines von nichtionischen Gruppen enthaltenden hydrophilen Vinylmonomeren mit einer Löslichkeit von nicht weniger als 1 g/100 g in Wasser (20°C) mit der Formel (III) oder (IV) (nachfolgend als Komponente (b2) bezeichnet), und zumindest eines von vernetzbaren Vinylmonomeren mit zwei oder mehr Vinylgruppen im Molekül (nachfolgend als Komponente (b3) bezeichnet) enthält, wobei das Copolymer erhalten wird durch radikalische Polymerisation von Monomerkomponenten, worin Komponente (b1)/Komponente (b2) 1/99 bis 80/20 (Molverhältnis) ist und das Verhältnis der Komponente (b3) zur Gesamtmenge der Monomeren 0,001 bis 5 Mol-% ist.

**2.** Behandlungszusammensetzung für Textilprodukte zur Verwendung in einer Trocknungsmaschine nach Anspruch 1, die in einem Spülschritt nach dem Waschen der Textilprodukte bei einem Waschschritt für Textilprodukte zugegeben und zur Verminderung von Falten, die beim Trocknungsschritt erzeugt werden, verwendet wird.

**3.** Verfahren zur Behandlung von Textilprodukten, umfassend die Wärmebehandlung von Textilprodukten, die mit der Behandlungszusammensetzung für Textilprodukte zur Verwendung in einer Trocknungsmaschine gemäß Anspruch 1 oder 2 behandelt sind, in einer Wärme-Trocknungsmaschine.

**4.** Verwendung der Zusammensetzung nach Anspruch 1 oder 2 in einem Behandlungsmittel zur Behandlung von

Textilprodukten in einer Trocknungsmaschine.

## Revendications

1. Composition de traitement pour produits textiles destinée à une utilisation dans un lave-linge séchant, qui comprend

 0,01 à 5,0% en masse, sur la base de la composition, d'un polymère cationique soluble dans l'eau ayant un poids moléculaire moyen en poids de 500 000 à 10 000 000 (ci-après appelé composant (A)),
 0,01 à 5,0% en masse, sur la base de la composition, d'un polymère cationique insoluble dans l'eau (ci-après appelé composant (B)) et
 un composé silicone (ci-après appelé composant (C)),
 dans laquelle le rapport du composant (A) sur la masse totale des composants (A) et (B) est 3 à 100% en masse et le rapport de la masse totale des composants (A) et (B) sur la masse totale des composants (A), (B) et (C) est 5 à 85% en masse,
 dans laquelle le composant (A) est un copolymère comprenant au moins un parmi des monomères vinyliques contenant un groupe cationique représentés par la formule (I) ou (II) (ci-après appelé composant (a1)) et au moins un parmi des monomères vinyliques hydrophiles contenant un groupe non ionique ayant une solubilité de pas moins de 1 g/100 g dans l'eau (20°C), représentés par la formule (III) ou (IV) (ci-après appelé composant (a2)), dans laquelle composant (a1)/composant (a2) est 1/99 à 80/20 (rapport molaire),

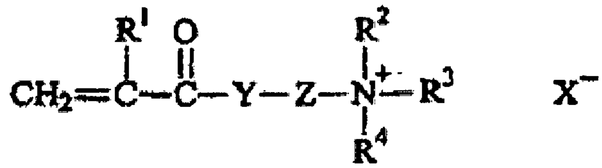

(I)

 dans laquelle $R^1$ représente un atome d'hydrogène ou un groupe méthyle, $R^2$ et $R^3$ sont identiques ou différents et représentent chacun un groupe alkyle ou alcényle ayant 1 à 4 atomes de carbone, $R^4$ représente un atome d'hydrogène ou un groupe alkyle ayant 1 à 4 atomes de carbone, Y représente un groupe -O-, -NH- ou -O-$CH_2CH(OH)$-, Z représente un groupe alkylène linéaire ou ramifié ayant 1 à 4 atomes de carbone, et X représente une base conjuguée pour acide, un atome d'halogène ou un groupe alkylsulfate ayant 1 à 4 atomes de carbone ;

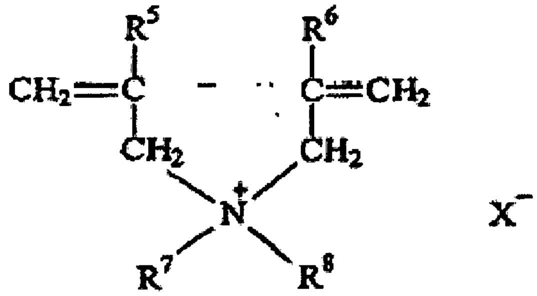

(II)

 dans laquelle $R^5$ et $R^6$ sont identiques ou différents et représentent chacun un atome d'hydrogène ou un groupe méthyle, $R^7$ et $R^8$ sont identiques ou différents et représentent chacun un atome d'hydrogène ou un groupe alkyle ayant 1 à 4 atomes de carbone, et X a le même sens que défini ci-dessus ;

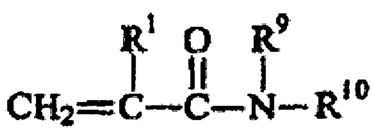

(III)

 dans laquelle $R^1$ a le même sens que défini ci-dessus, $R^9$ et $R^{10}$ sont identiques ou différents et représentent chacun un atome d'hydrogène ou un groupe alkyle ou alcényle linéaire ou ramifié qui a 1 à 8 atomes de carbone et peut avoir un groupe hydroxyle ; et

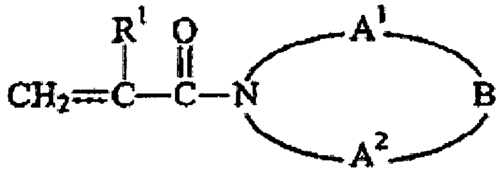

(IV)

dans laquelle $R^1$ a le même sens que défini ci-dessus, $A^1$ et $A^2$ sont identiques ou différents et représentent chacun un groupe représenté par une formule $-(CH_2)_n-$ dans laquelle n est un entier de 2 à 6, et B représente un groupe -O- ou $-CH_2-$, et

dans laquelle le composant (B) est un copolymère comprenant, comme monomères constitutifs essentiels, au moins un parmi des monomères vinyliques contenant un groupe cationique représentés par la formule (I) ou (II) (ci-après appelé composant (b1)), au moins un parmi des monomères vinyliques hydrophiles contenant un groupe non ionique ayant une solubilité de pas moins de 1 g/100 g dans l'eau (20°C), représentés par la formule (III) ou (IV) (ci-après appelé composant (b2)), et au moins un parmi des monomères vinyliques réticulables ayant deux groupes vinyle ou plus dans la molécule (ci-après appelé composant (b3)), le copolymère étant obtenu par polymérisation radicalaire de composants monomères, dans laquelle composant (b1)/composant (b2) est 1/99 à 80/20 (rapport molaire), et le rapport du composant (b3) sur la quantité totale des monomères est 0,001 à 5% en moles.

**2.** Composition de traitement pour produits textiles destinée à une utilisation dans un lave-linge séchant selon la revendication 1, qui est ajoutée à une étape de rinçage après lavage de produits textiles à une étape de lavage de produits textiles et utilisée pour limiter des plis générés à une étape de séchage.

**3.** Procédé de traitement de produits textiles, qui comprend un traitement à la chaleur, dans un lave-linge séchant par chauffage, de produits textiles traités avec la composition de traitement pour produits textiles destinée à une utilisation dans un lave-linge séchant selon la revendication 1 ou 2.

**4.** Utilisation de la composition selon la revendication 1 ou 2 dans un agent de traitement pour traiter des produits textiles dans un lave-linge séchant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7018578 A
- JP 6017376 A
- JP 2005187987 A
- JP 2004512431 A
- JP 2004515660 A
- WO 2005103215 A
- US 20040116321 A
- WO 200425017 A
- JP 2005528538 B
- JP 10508912 B
- JP 2005082924 A
- JP 60018690 B
- JP 61048521 B
- JP 4037554 U